# FASCICULE DE BREVET EUROPEEN

(11) **EP 2 512 814 B1**
(45) Date de publication et mention de la délivrance du brevet: **30.10.2013**
(21) Numéro de dépôt: 10807599.5
(22) Date de dépôt: 16.12.2010
(51) Int. Cl.: C09D 11/02, C09D 11/00, B41M 3/14, B42D 15/00, C09K 11/77

(54) **PRODUITS DE CODAGE A BASE DE LANTHANIDES, ET LEURS UTILISATIONS**
AUF LANTHANID BASIERTE CODIERPRODUKTE UND IHRE VERWENDUNG
LANTHANIDE-BASED CODING PRODUCTS AND USE THEREOF

(30) Priorité: 16.12.2009 FR 0959074
(43) Date de publication de la demande: 24.10.2012
(73) Titulaire: Oberthur Cash Protection, 21000 Dijon (FR); Nano-H S.A.S., 38070 Saint-quentin-fallavier (FR); Université Claude Bernard Lyon I, 69622 Villeurbanne Cedex (FR); Institut National Des Sciences Appliquees De Lyon, 69621 Villeurbanne (FR); Centre National de la Recherche Scientifique, 75016 Paris (FR)
(72) Inventeur: BRIENT, Luc, F-21000 Dijon (FR); CROWTHER, Nicolas, F-69006 Lyon (FR); LOUIS, Cédric, F-38138 Les Codes D'arey (FR); TILLEMENT, Olivier, F-69270 Fontaines Saint Martin (FR); PERRIAT, Pascal, F-69001 Lyon (FR)
(74) Mandataire: Oudin, Stéphane
(86) Numéro de dépôt international: PCT/FR2010/052756
(87) Numéro de publication internationale: WO 2011/080461

(56) Documents cités:
- EP-A1- 0 927 750
- WO-A1-2008/012225
- WO-A2-2005/051846
- DE-A1- 4 114 732
- US-A1- 2007 044 679
- US-A1- 2007 096 057
- BAZZI R ET AL: "Synthesis and luminescent properties of sub-5-nm lanthanide oxides nanoparticles", JOURNAL OF LUMINESCENCE, AMSTERDAM, NL LNKD- DOI:10.1016/S0022-2313(02)00588-4, vol. 102-103, 1 mai 2003 (2003-05-01), pages 445-450, XP004416620, ISSN: 0022-2313 cité dans la demande

## Description

La présente invention concerne le domaine technique des documents-valeur. Elle trouve notamment application pour le codage de tels documents.

Il existe à ce jour une forte demande pour des systèmes permettant de tracer et d'authentifier un document-valeur au moyen d'un codage fiable et infalsifiable, invisible à l'oeil nu ou non identifiable de manière immédiate.

On connaît des moyens de codage chimiques ou magnétiques à partir de matériaux invisibles à l'oeil nu, qui peuvent être détectés avec un appareil spécifique. Ainsi, il est possible de détecter des billets de banque fluorescents sous une lampe UV.

Les matériaux fluorescents organiques ou inorganiques nécessitent souvent pour des codages complexes des études de développement et un dispositif précis de détection.

Les matériaux organiques sont fragiles et ne sont pas adaptés pour coder de façon unitaire des milliers de petits lots par an, avec à chaque fois un code différent.

Il a été proposé d'utiliser des marqueurs de type acide nucléique (voir la demande de brevet WO 03/80931) mais la stabilité chimique de tels produits est encore limitée, et leur fabrication coûteuse.

La demande de brevet US 2007/102920 concerne le marquage de documents de sécurité tels que des cartes bancaires ou des documents d'identité au moyen de sels ou d'oxydes de métaux rares, notamment de terres rares, dans un rapport prédéterminé. Le seul exemple de ce document décrit l'utilisation d'un mélange d'oxyde d'erbium, d'oxyde de lanthanium et d'oxyde d'yttrium dans un rapport 4/2/1 ou 4/1/1. L'inconvénient de ce type de marqueur réside dans le fait que, pour réaliser un codage unitaire de plusieurs milliers de lots par an, il faut mélanger un grand nombre d'oxydes ce qui devient très coûteux ; il est par ailleurs difficile ou fastidieux d'identifier l'ensemble des oxydes présents.

EP-A-0 927 750 décrit un produit de codage qui peut comprendre deux oxysulfures mixtes de lanthanide.

US-A1-2007/0044679 décrit des compositions et des méthodes pour le marquage des matériaux. Parmi les composés utilisés, des mélanges comprenant au moins cinq et préférentiellement six à huit oxydes ou oxysulfures de terres rares. Ce document ne décrit pas l'utilisation d'oxydes ou oxysulfures mixtes de lanthanide.

Il serait donc avantageux de pouvoir disposer de produits de codage qui soient unitaires, c'est-à-dire individualisés, pour chaque document-valeur ou lot de documents-valeur que l'on souhaite tracer et/ou authentifier. Il serait également avantageux de pouvoir disposer de produits de codage qui offrent une très grande capacité de codage, sans induire des coûts de fabrication élevés à l'échelle industrielle. Il serait également souhaitable de pouvoir disposer de produits de codage qui puissent être authentifiés facilement, au moyen d'un appareillage conventionnel.

Il a été trouvé de manière surprenante, et c'est le fondement de l'invention, qu'il est possible d'utiliser des composés à base de lanthanides pour résoudre les problèmes posés ci-dessus.

Ainsi, selon un premier aspect, l'invention concerne un produit de codage qui comprend au moins deux composés de lanthanides choisis parmi les halogénures mixtes de lanthanides, les sulfures mixtes de lanthanides, les phosphates mixtes de lanthanides, les oxydes mixtes de lanthanides, les hydroxydes mixtes de lanthanides, les oxohydroxydes mixtes de lanthanides, et les mélanges de ces composés.

Le terme «mixte» utilisé dans la présente demande signifie que chaque composé (halogénure, sulfure, etc.) comprend au minimum deux lanthanides différents, de préférence deux ou trois lanthanides différents, et de préférence encore deux lanthanides différents.

De manière avantageuse, les produits de codage comprennent deux, trois, quatre ou cinq composés de lanthanides tels que définis ci-dessus ; les produits de codage comprenant deux ou trois composés de lanthanides constituent une classe de produits actuellement préférée.

Les modes de réalisation décrits ci-après concernent plus particulièrement des composés comprenant deux lanthanides différents. Il va de soi que l'homme du métier peut adapter ces modes de réalisation particuliers aux composés comprenant par exemple trois lanthanides différents.

Selon un mode de réalisation de l'invention :
- les halogénures mixtes de lanthanides répondent à la formule [Ln1ᵢLn2ⱼ]X₃ où Ln1 représente un premier lanthanide, Ln2 représente un second lanthanide, différent du premier, i et j représentent les proportions atomiques (en pourcentage) de chaque lanthanide, et X représente un atome d'halogène (F, Cl, I, Br) ;
- les sulfures mixtes de lanthanides répondent à la formule [Ln1ᵢLn2ⱼ]₂S₃ où Ln1, Ln2, i et j sont tels que définis ci-dessus ;
- les phosphates mixtes de lanthanides répondent à la formule [Ln1ᵢLn2ⱼ]PO₄ · nH₂O où Ln1, Ln2, i et j sont tels que définis ci-dessus ;
- les oxydes mixtes de lanthanides répondent à la formule [Ln1ᵢLn2ⱼ]₂O₃, où Ln1, Ln2, i et j sont tels que définis ci-dessus ;
- les hydroxydes mixtes de lanthanides répondent à la formule [Ln1ᵢLn2ⱼ](OH)₃, où Ln1, Ln2, i et j sont tels que définis ci-dessus ;
- les oxohydroxydes mixtes de lanthanides répondent à la formule [Ln1ᵢLn2ⱼ]₂Oₓ(OH)_{y}, où Ln1, Ln2, i et j sont tels que définis ci-dessus, x est choisi de 0 à 3, et y = 6 - 2x.

Les oxydes mixtes de lanthanides représentent une classe actuellement préférée de composés de lanthanides, et peuvent être les seuls constituants des produits de codage selon l'invention. Ces oxydes mixtes peuvent se présenter sous la forme de solutions solides.

La proportion atomique en pourcentage (i,j) de chaque lanthanide est généralement comprise dans la gamme allant de environ (95:5) à environ (5:95). Cette proportion peut avantageusement varier dans la gamme allant de environ (90:10) à environ (10:90), de préférence dans la gamme allant de environ (80:20) à environ (20:80), de préférence encore dans la gamme allant de environ (70:30) à environ (30:70), comme par exemple (70:30), (65:35), (60:40), (55:45), (50:50), (45:55), (40:60), (35:65) ou (30:70).

Selon un autre mode de réalisation de l'invention, les deux lanthanides sont indépendamment choisis parmi la liste Y, La, Pr, Nd, Sm, Eu, Gd, Tb, Dy, Ho, Er, Tm, Yb, Lu. De manière avantageuse, le premier lanthanide est choisi parmi la liste Gd, Y, La, Ho. Le second lanthanide est avantageusement choisi parmi la liste Eu, Tb, Nd, Yb, Er, Dy, Pr, Lu, Sm, Tm.

Les oxydes mixtes de lanthanides selon l'invention se présentent sous la forme de poudre micronique ou submicronique, et peuvent être préparés par des méthodes bien connues de l'homme du métier.

Ainsi, ces oxydes peuvent être obtenus par la méthode dite « polyol ». Cette méthode « polyol » consiste en une précipitation directe d'un solide au sein d'un polyalcool porté à une température comprise généralement entre 150 °C et 250 °C. Un (des) précurseur(s) métallique(s) est (sont) préalablement dissous dans le polyol (par exemple du diéthylène glycol), puis après ajout éventuel d'un réactif, la solution est portée à une température supérieure à 150 °C. Le polyol agit comme un stabilisant, limite la croissance des particules et minimise l'agglomération des poudres.

Il est également possible de mettre en oeuvre la technique décrite par Bazzi et al. dans Journal of Luminescence, 102-103, (2003), 445-450, ou bien encore la technique décrite dans la demande de brevet WO 2005/051846. Cette dernière technique permet également d'obtenir des hydroxydes mixtes et des oxohydroxydes mixtes de lanthanides.

Les halogénures mixtes de lanthanides peuvent être préparés selon la technique décrite dans Journal of Solid State Chemistry, 181, (2008), 1070-1074.

Les sulfures mixtes de lanthanides peuvent être préparés selon la technique décrite dans Chemistry of Materials, 17, (2005), 3114-3121.

Les phosphates mixtes de lanthanides peuvent être préparés selon la technique décrite dans Material Letters, 63, (2009), 1635-1637.

Selon un mode de réalisation particulier de l'invention les oxydes mixtes de lanthanides se présentent sous la forme de (nano)particules constituées d'un coeur (à base d'oxyde mixte de lanthanides, d'hydroxyde mixte de lanthanides, ou d'oxohydroxyde mixte de lanthanides, tels que définis ci-dessus) et d'un enrobage de type polysiloxane, comme décrit dans la demande de brevet WO 2009/053644 (dont le contenu est incorporé par référence).

Les produits de codage de l'invention trouvent notamment application pour le traçage et l'authentification de documents-valeur.

Par « document-valeur » on entend par exemple un document fiduciaire, servant à transmettre une somme d'argent, tel que notamment des billets de banque, des chèques, des cartes bancaires, ou bien encore tout document émis par une administration de l'Etat pour attester de l'identité d'une personne, de ses droits à conduire un véhicule, tels que notamment une carte d'identité, un passeport, un permis de conduire.

Les produits de codage selon l'invention se présentent généralement sous la forme d'un mélange (intime) des différents composés de lanthanides. Dans un mode de réalisation particulier, chaque composé de lanthanides est conditionné dans un emballage ou conteneur séparé. Il est ainsi possible, en fonction de la nature du document-valeur à tracer et/ou authentifier, de préparer un mélange des composés de lanthanides requis juste avant leur utilisation.

Les produits de codage selon l'invention sont tout particulièrement adaptés au traçage et/ou à l'authentification de billets de banque.

Lors du transport de fonds entre une agence bancaire centrale et des succursales, les billets de banque sont disposés dans des enceintes sécurisées du type cassette ou conteneur pour la distribution automatique des billets. Ces enceintes renferment des moyens de dégradation des billets par des dispositifs de projection d'un fluide d'altération ou de maculage, notamment un fluide de marquage à coloration visible, tel qu'une encre, les moyens de dégradation étant activés dès qu'il y a tentative d'intrusion non autorisée dans l'enceinte ou en cas de perte ou de vol de cette dernière.

Ainsi, selon un autre aspect, l'invention concerne une encre comprenant un produit de codage tel que défini ci-dessus.

Selon un troisième aspect, l'invention concerne un document-valeur maculé par l'encre précitée.

Selon un quatrième aspect, l'invention concerne l'utilisation d'un produit de codage tel que défini ci-dessus, pour le traçage et/ou l'authentification de documents-valeur, notamment de billets de banque.

Les différents modes de réalisation décrits pour le premier aspect de l'invention s'appliquent par analogie aux deuxième, troisième et quatrième aspects de l'invention.

L'utilisation de composés de lanthanides tels que définis ci-dessus, comprenant au moins deux lanthanides différents, présente les avantages suivants :
- on peut atteindre une capacité de codage élevée tout en ayant un nombre beaucoup plus limité d'éléments chimiques (lanthanides) à détecter ;
- en développant des produits de codage ayant des compositions bien déterminées, les possibilités d'interférences avec d'autres lanthanides potentiellement déjà utilisées dans certains produits sont fortement diminuées ;
- il est possible d'associer un produit de codage unique à chaque lot de documents-valeur (par exemple à chaque cassette sécurisée contenant des liasses de billets, utilisée pour la distribution automatique des billets) ;
- les produits de codage peuvent être détectés par des techniques conventionnelles (du type microscopie électronique à balayage et/ou spectroscopie de dispersion d'énergie des rayons X) déjà utilisées dans les laboratoires d'analyse spécialisés.

L'invention est illustrée par les préparations et exemples ci-après, donnés à titre purement indicatif.

### Préparation 1 : obtention d'une poudre de solution solide d'oxydes de terres-rares de composition atomique Y_{50%}Er_{50%}

On utilise comme réactifs de départ des solutions de nitrates de terres-rares (Rhodia Electronics and Catalysis ; Rare-Earths), dont la concentration est exprimée en équivalents d'oxydes (Er₂O₃ 300 g/L et Y₂O₃ 200 g/L). Dans un réacteur de 1L équipé d'une agitation mécanique, on introduit environ 100 mL d'eau déminéralisée, puis 209 mL de solution d'oxyde d'erbium puis 185 mL de solution d'oxyde d'yttrium. A vitesse d'agitation maximale, on introduit ensuite rapidement 200 mL de solution d'ammoniaque (Aldrich, 25%).

Le précipité (gel) ainsi obtenu est laissé 15 minutes sous agitation, puis est lavé par centrifugation avec deux fois 500 ml d'eau déminéralisée.

Le gel est ensuite placé à 90°C pendant une nuit. La poudre ainsi obtenue est transférée dans un creuset, puis calcinée à 1000°C pendant une nuit.

La poudre obtenue est recueillie dans un bol de broyage, puis est broyée 5 minutes en broyeur planétaire. On obtient environ 50 g d'une solution solide d'oxydes d'yttrium et d'erbium de composition atomique Y_{50%}Er_{50%}.

### Préparation 2 : obtention d'une poudre de solution solide d'oxydes de terres-rares de composition atomique Y_{80%}Nd_{20%}

Le protocole mis en oeuvre ci-après est adapté de celui décrit dans la demande de brevet WO 2005/051846.

Dans un ballon de 500 mL surmonté d'un réfrigérant, on introduit 250 mL de diéthylène glycol puis 7,9 g de Nd(NO₃)₃, 6H₂O (99,9%) et 27,3 g de Y(NO₃)₃, 6H₂0 (99,9%). La solution est chauffée par bain d'huile à différentes températures et différents temps de chauffage :
- 60°C durant 45 minutes, puis 1 heure de chauffage progressif jusqu'à 140°C,
- 140°C durant 60 minutes avec addition de 2 ml de soude 3N puis chauffage progressif en 30 minutes à 180°C,
- 180°C pendant 120 minutes.

La solution obtenue est refroidie à température ambiante, est diluée par ajout d'éthanol sous agitation et filtrée avec un filtre à 200 nm. La poudre obtenue est redispersée dans 100 mL d'éthanol sous agitation puis filtrée. Cette dernière opération est répétée 2 fois et la poudre finale est séchée à l'étuve pendant une heure.

La poudre est alors composée principalement d'un mélange d'hydroxyde, d'oxyde et d'oxohydroxyde d'yttrium et de néodyme.

La poudre obtenue à la sortie de l'étuve peut alors être chauffée à des températures de l'ordre de 300°C pendant 12h, 500°C pendant 1h, 700°C pendant 1h et 900°C pendant 2h.

Après refroidissement la poudre subit un léger broyage mécanique. On obtient une solution solide d'oxydes d'yttrium et de néodyme de composition atomique Y_{80%}Nd_{20%}.

### Préparation 3 : obtention d'une poudre de solution solide d'oxydes de terres-rares de composition atomique Gd_{80%}Er_{20%}

Dans un ballon en verre muni d'un réfrigérant, d'une agitation magnétique et d'un système de chauffage, on dissout 16,23 g de GdCl₃, 6H₂O et 4,17 g de ErCl₃, 6H₂O dans 2L de diéthylène glycol maintenu à 60°C. 20mL d'eau déminéralisée contenant 10g de soude dissoute sont ajoutés à la solution. La solution est chauffée par bain d'huile à différentes températures et différents temps de chauffage :
- 60°C durant 45 minutes, puis 1 heure de chauffage progressif jusqu'à 140°C,
- 140°C durant 60 minutes avec addition de 20 ml de soude 12,5N puis chauffage progressif en 30 minutes à 180°C,
- 180°C pendant 120 minutes.

La solution obtenue est refroidie à température ambiante, est diluée par ajout d'éthanol sous agitation et filtrée avec un filtre à 200 nm. La poudre obtenue est redispersée dans 100 mL d'éthanol sous agitation puis filtrée. Cette dernière opération est répétée 2 fois et la poudre finale est séchée à l'étuve pendant une heure.

La poudre est alors composée principalement d'un mélange d'hydroxyde, d'oxyde et d'oxohydroxyde de gadolinium et d'erbium.

La poudre obtenue à la sortie de l'étuve peut alors être chauffée à des températures de l'ordre de 300°C pendant 12h, 500°C pendant 1h, 700°C pendant 1h et 900°C pendant 2h.

Après refroidissement la poudre subit un léger broyage mécanique. On obtient une solution solide d'oxydes de gadolinium et d'erbium de composition atomique Gd_{80%}Er_{20%}.

Les exemples qui suivent concernent la caractérisation de différents oxydes mixtes de lanthanides dans divers milieux et/ou sur divers supports. Ces oxydes ont été analysés à l'aide d'un microscope électronique à balayage (MEB) Philips XL 20, avec une tension d'accélération de 20 kV, une distance de travail de 12 mm, avec une détection des électrons secondaires ou des électrons rétrodiffusés. L'analyse élémentaire in-situ est effectuée par spectroscopie de dispersion d'énergie des rayons X (EDX), à l'aide d'une sonde de marque EDAX, utilisée avec un étalonnage standard.

### Exemple 1 : caractérisation d'une poudre d'oxyde d'yttrium et d'europium Y_{50%}Eu_{50%}

Cette poudre a été obtenue en suivant le protocole expérimental décrit dans la préparation 3.

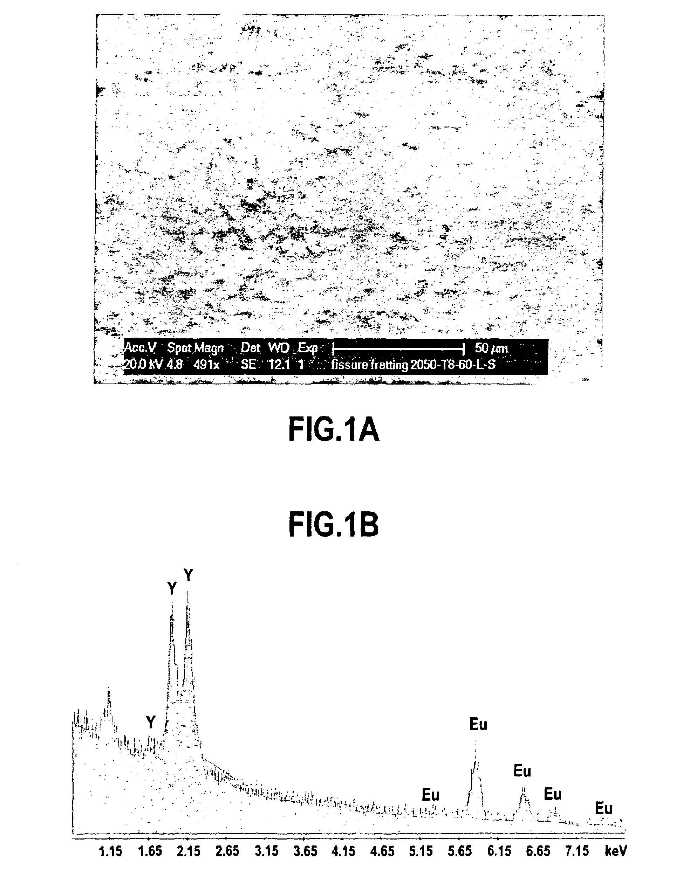

La figure 1A représente une photographie au MEB de la poudre. La figure 1B représente le spectre EDX d'une zone centrale de la photographie précitée. Ce spectre met en évidence la présence des deux éléments recherchés. La quantification atomique issue de ce spectre donne, sans étalonnage particulier au préalable : Y 50±2% et Eu 50±2%.

### Exemple 2 : caractérisation de poudres d'oxyde de gadolinium et d'erbium Gd_{95%}Er_{5%}, d'oxyde de gadolinium et d'europium Gd_{95%}Er_{5%}, et d'oxyde de gadolinium et d'holmium Gd_{95%}Ho_{5%}

Ces poudres ont été obtenues en suivant le protocole expérimental décrit dans la préparation 3.

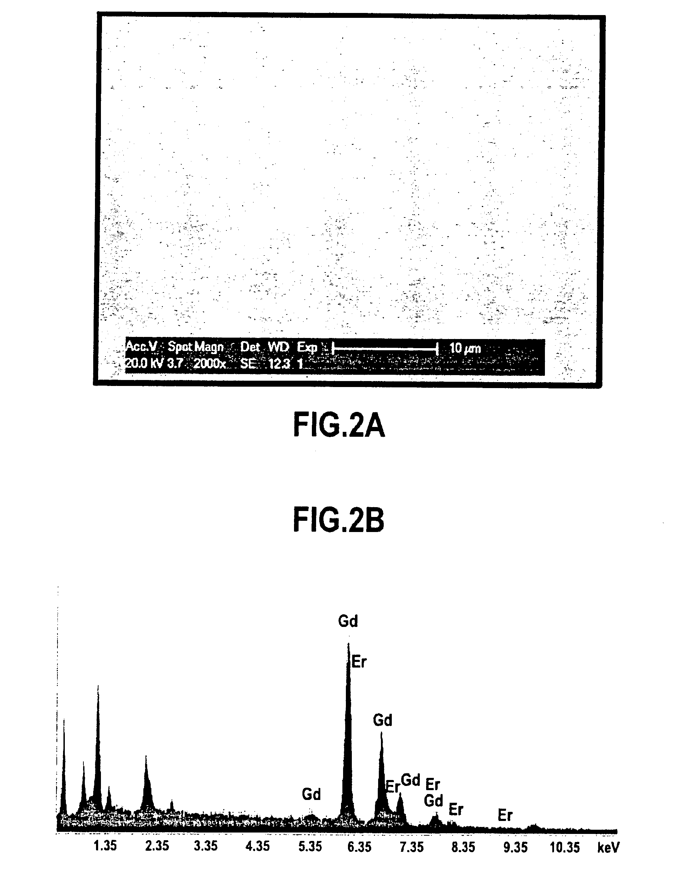

L'analyse a été effectuée à partir d'une suspension de chacune des poudres dans la N-méthyl-pyrrolidone (NMP). La figure 2A représente une photographie au MEB de la poudre d'oxyde de gadolinium et d'erbium. La figure 2B représente le spectre EDX d'une zone centrale (carré) de la photographie précitée. Ce spectre met en évidence la présence des deux éléments recherchés. La quantification atomique issue de ce spectre donne, sans étalonnage particulier au préalable : Gd 95±2% et Er 5±2%.

Des résultats comparables (non représentés) ont été obtenus avec
- d'une part, une poudre d'oxyde de gadolinium et d'europium Gd_{95%}Eu_{5%} (quantification atomique, sans étalonnage particulier au préalable : Gd 95±2% et Eu 5±2%)
- d'autre part, avec une poudre d'oxyde de gadolinium et d'holmium Gd_{95%}Ho_{5%} (quantification atomique, sans étalonnage particulier au préalable : Gd 95±2% et Ho 5±2%).

### Exemple 3 : caractérisation de poudres d'oxyde de gadolinium et d'holmium Gd_{8o%}Ho_{20%}, Gd_{65%}Ho_{35%} et Gd_{50%}Ho_{50%}

Ces poudres ont été obtenues en suivant le protocole expérimental décrit dans la préparation 3.

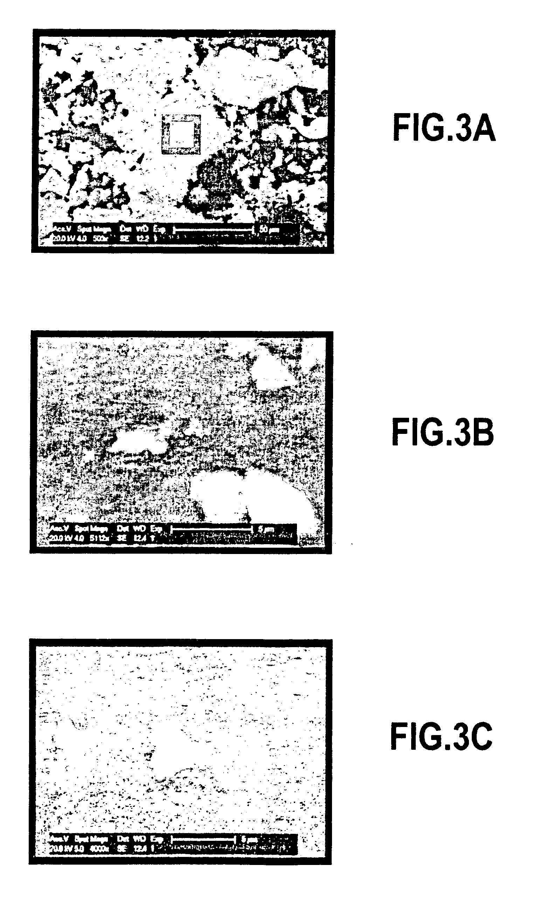

L'analyse a été effectuée à partir d'une suspension de chacune des poudres dans la NMP. Les figures 3A, 3B et 3C représentent respectivement une photographie au MEB de chacune des poudres. La quantification atomique donne, sans étalonnage particulier au préalable :
- pour la fig. 3A : Gd 80±2% et Ho 20±2%
- pour la fig. 3B : Gd 65±2% et Ho 35±2%
- pour la fig. 3C : Gd 50±2% et Ho 50±2%.

### Exemple 4 : caractérisation de poudres d'oxyde de gadolinium, d'europium et d'erbium Gd_{70%}Eu_{15%}Er_{15%} et d'oxyde de gadolinium, d'europium et d'holmium Gd_{70%}Eu_{15%}Ho_{15%}

Ces poudres ont été obtenues en suivant le protocole expérimental décrit dans la préparation 3.

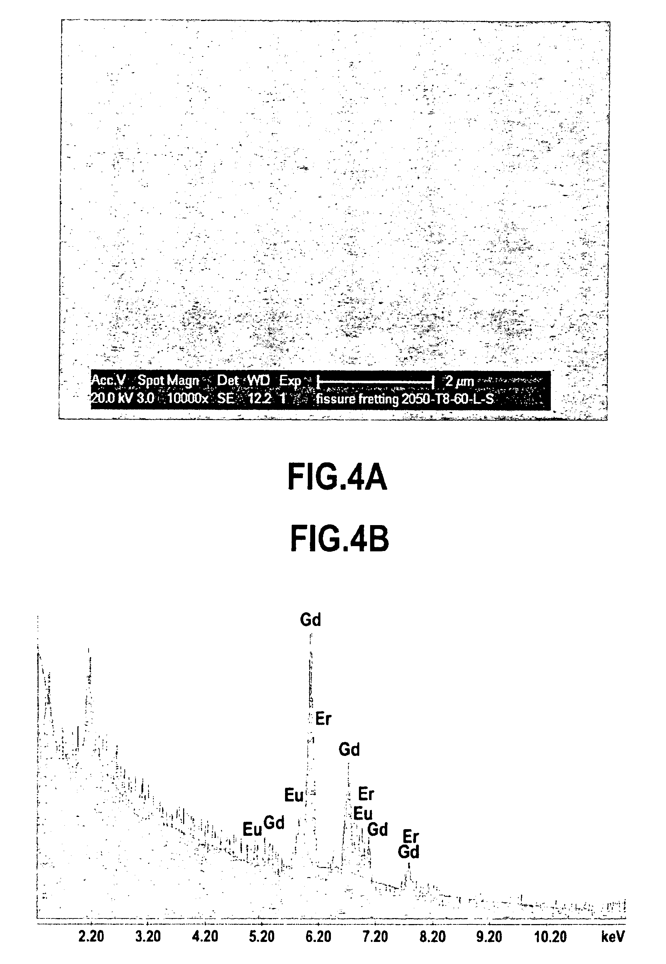

La figure 4A représente une photographie au MEB de la poudre d'oxyde de gadolinium, d'europium et d'erbium. La figure 4B représente le spectre EDX d'une zone centrale de la poudre précitée. Ce spectre met en évidence la présence des trois éléments recherchés.

La quantification atomique issue de ce spectre donne, sans étalonnage particulier au préalable : Gd 70 ± 5%, Eu 15 ± 5% et Er 15 ± 5%.

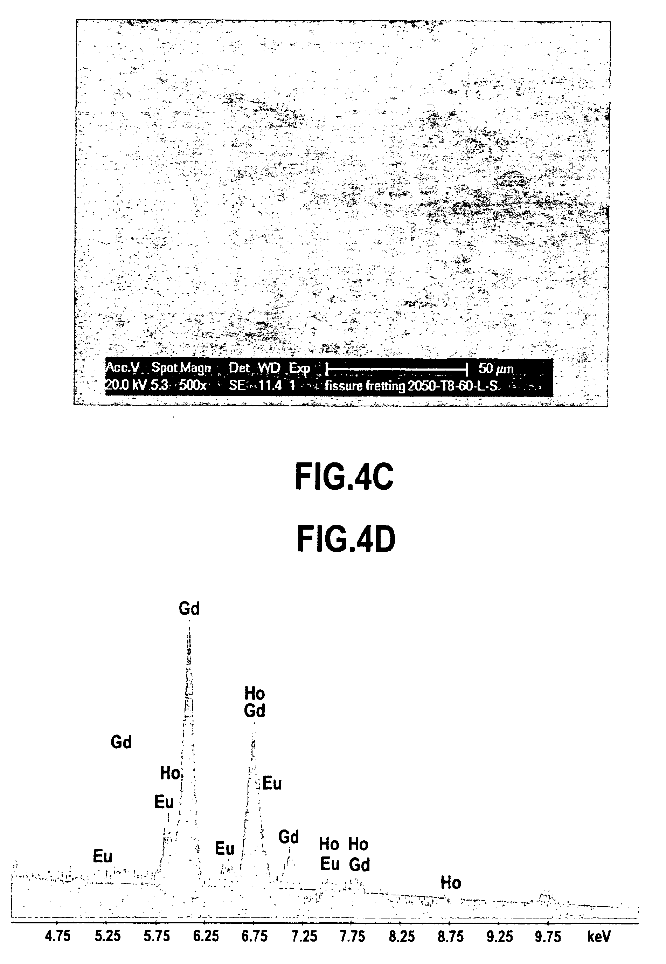

La figure 4C représente une photographie au MEB de la poudre d'oxyde de gadolinium, d'europium et d'holmium. La figure 4D représente le spectre EDX d'une zone centrale de la poudre précitée. Ce spectre met en évidence la présence des trois éléments recherchés. La quantification atomique issue de ce spectre donne, sans étalonnage particulier au préalable : Gd 70 ± 5%, Eu 15 ± 5% et Ho 15 ± 5%.

### Exemple 5 : authentification de billets de banque maculés par de l'encre contenant un mélange de poudres d'oxyde de gadolinium et d'holmium Gd_{50%}Ho_{50%}, d'oxyde d'yttrium et d'europium Y_{50%}Eu_{50%}, et d'oxyde de lanthanium et d'erbium La_{50%}Er_{50%}

On a préparé les trois poudres d'oxyde en suivant le protocole expérimental décrit dans la préparation 3.

On a ensuite rempli deux flacons de verre avec une encre de maculage indélébile et spécifiquement destinée à la destruction de documents-valeur, commercialisée par la société SICPA, puis on a introduit dans chaque flacon un mélange des trois poudres précitées, et on a scellé chaque flacon afin de garantir son étanchéité.

Séparément, on a rangé 2500 vignettes (spécimens de billets de banque) dans le tiroir d'un conteneur du type utilisé pour la distribution automatique des billets. On a placé les deux flacons accolés dans la coque interne du conteneur avant utilisation de ce dernier, puis on a déclenché la mise à feu afin de projeter l'encre contenue dans chaque flacon sur les vignettes.

Après déclenchement, on a prélevé 2 lots de 10 vignettes dans le conteneur, sensiblement aux mêmes endroits, à savoir du devant du tiroir jusqu'au fond de celui-ci et chaque lot de 10 vignettes est rangé dans une pochette étanche pour analyse.

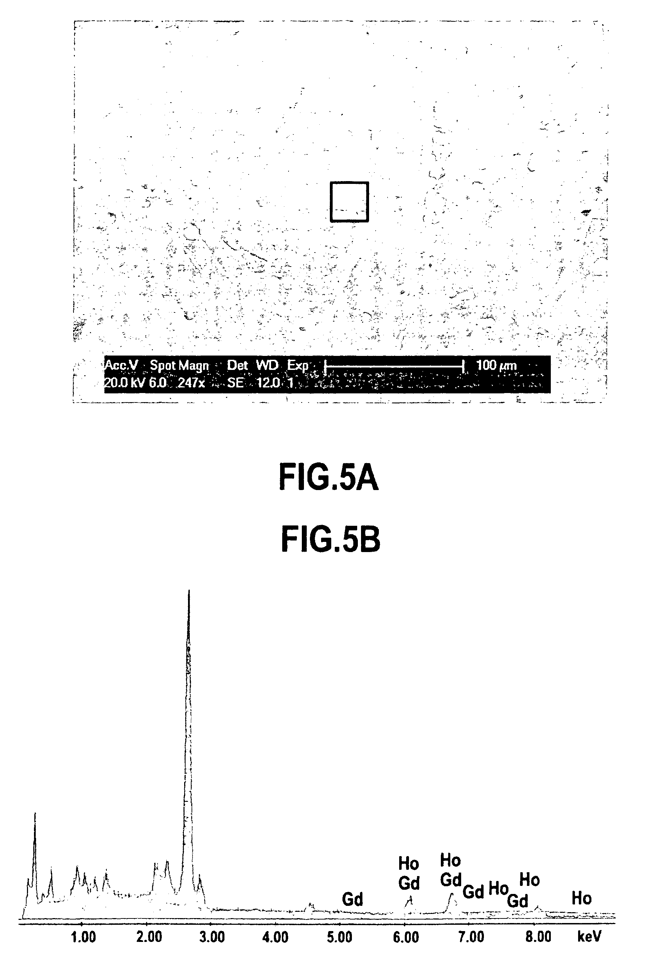

La figure 5A représente une photographie au MEB de fibres d'une vignette maculée. La figure 5B représente le spectre EDX d'une zone centrale (carré) de la photographie précitée. Ce spectre met en évidence la présence de deux des éléments recherchés (Gd, Ho). La quantification atomique issue de ce spectre donne, sans étalonnage particulier au préalable : Gd 50±5% et Ho 50±5%.

De la même manière, on a mis en évidence sur les vignettes maculées :
- d'une part, la présence de (Y,Eu), avec une quantification atomique, sans étalonnage particulier au préalable, de Y 50±5% et Eu 50±5% (spectre non représenté) ;
- d'autre part, la présence de (La,Er), avec une quantification atomique, sans étalonnage particulier au préalable, de La 50±5% et Er 50±50% (spectre non représenté).

### Exemple 6: authentification de billets de banque maculés par de l'encre contenant un mélange de poudres d'oxyde d'yttrium et d'erbium Y_{65%}Er_{35%}, d'oxyde de gadolinium et de néodyme Gd_{50%}Nd_{50%}, et d'oxyde d'holmium et de terbium Ho_{50%}Tb_{50%}

On a répété le mode opératoire décrit à l'exemple 5, en utilisant un mélange de poudres d'oxyde d'yttrium et d'erbium, d'oxyde de gadolinium et de néodyme et d'oxyde d'holmium et de terbium. Chaque poudre a été obtenue en suivant le protocole expérimental décrit dans la préparation 1.

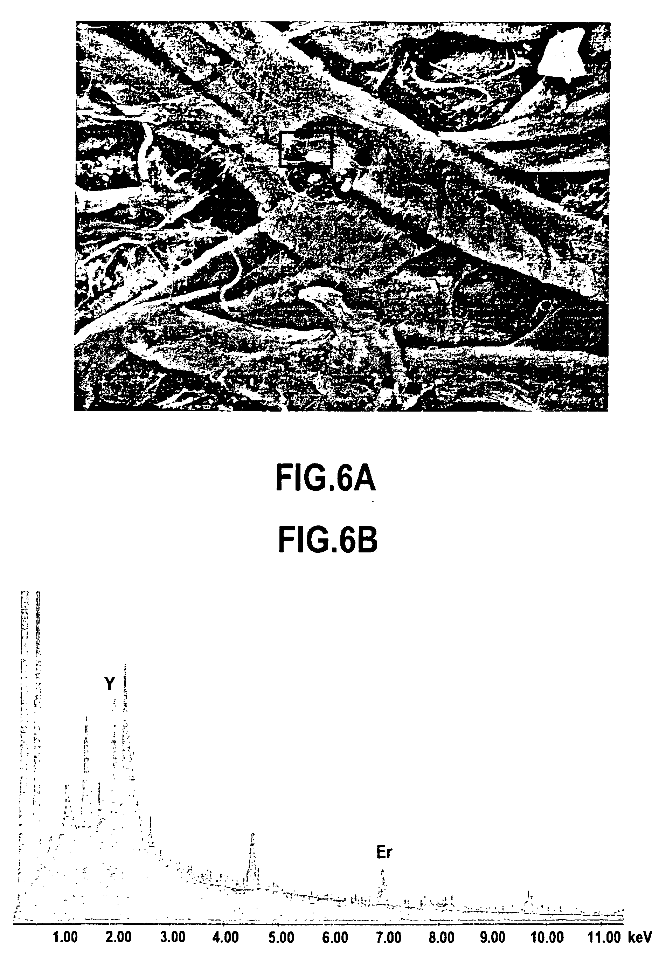

La figure 6A représente une photographie au MEB de fibres d'une vignette maculée. La figure 6B représente le spectre EDX d'une zone centrale (carré) de la photographie précitée. Ce spectre met en évidence la présence de deux des éléments recherchés (Y, Er). La quantification atomique issue de ce spectre donne, sans étalonnage particulier au préalable : Y 65±2% et Er 35±2%.

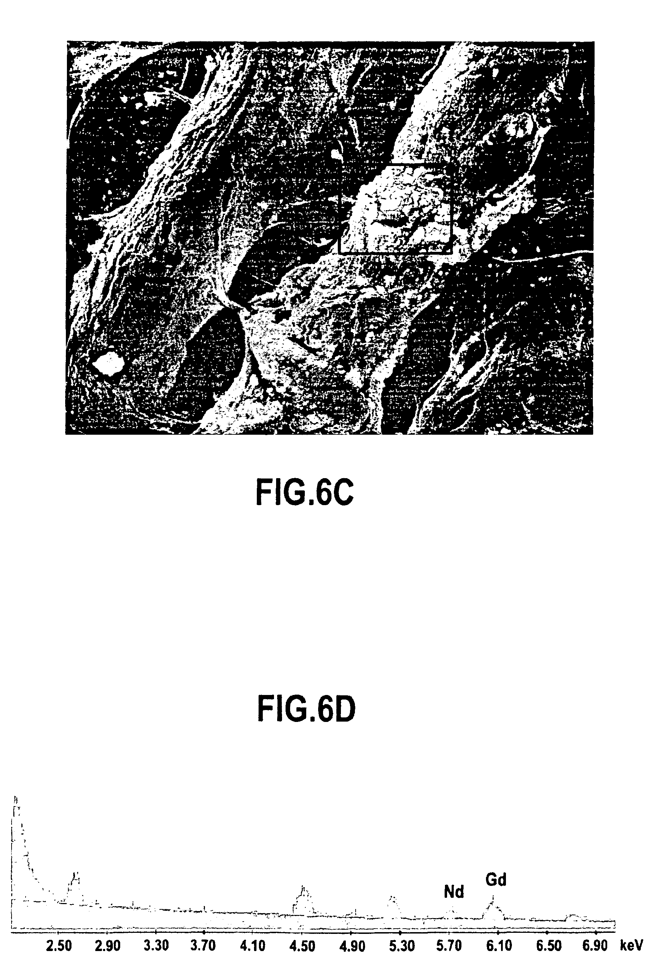

La figure 6C représente une photographie au MEB de fibres d'une autre vignette maculée. La figure 6D représente le spectre EDX d'une zone centrale (carré) de la photographie précitée. Ce spectre met en évidence la présence de deux autres éléments recherchés (Gd, Nd). La quantification atomique issue de ce spectre donne, sans étalonnage particulier au préalable : Gd 50±2% et Nd 50±2%.

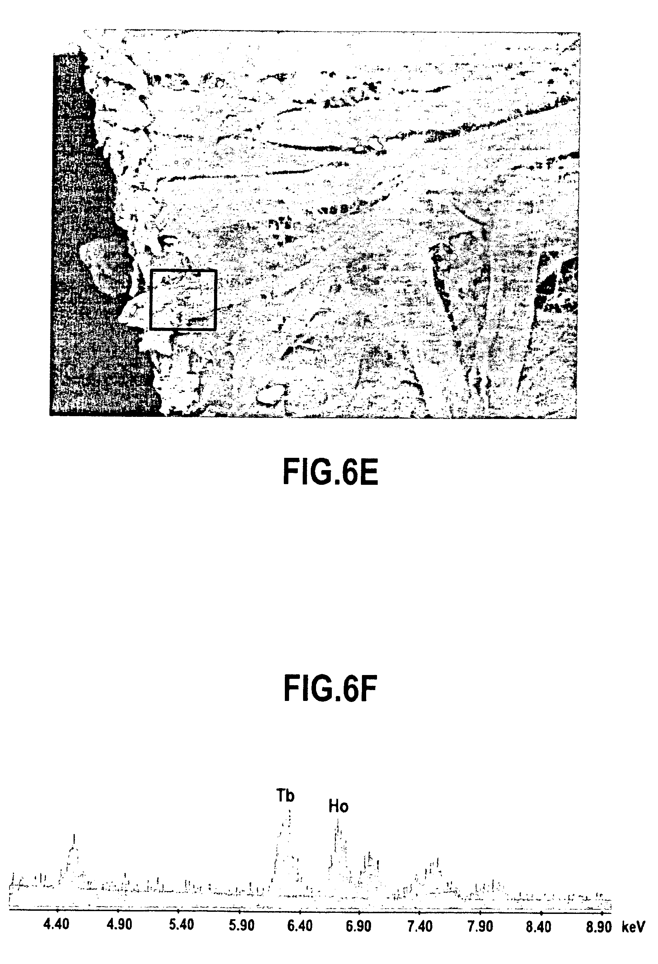

La figure 6E représente une photographie au MEB de fibres d'une autre vignette maculée. La figure 6F représente le spectre EDX d'une zone centrale (carré) de la photographie précitée. Ce spectre met en évidence la présence des deux derniers éléments recherchés (Ho, Tb). La quantification atomique issue de ce spectre donne, sans étalonnage particulier au préalable : Ho 50±2% et Tb 50±20%.

### Exemple 7 : mise en évidence de l'existence d'une solution solide des lanthanides au sein des particules

On a préparé différents oxydes d'yttrium et de dysprosium, ayant des compositions allant de Y_{20%}Dy_{80%} à Y_{80%}Dy_{20%} avec un pas de 10%, en suivant le protocole expérimental de la préparation 3.

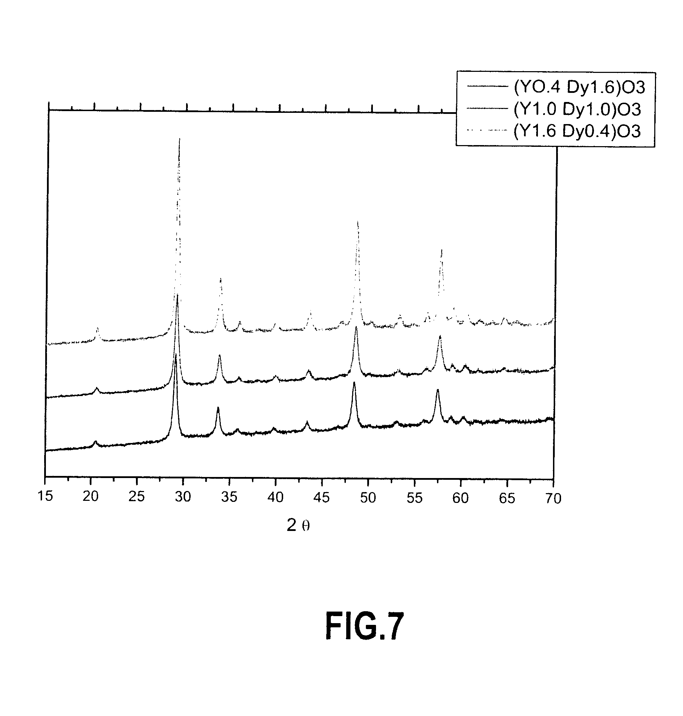

La figure 7 représente les diffractogrammes de rayons X des oxydes de composition Y_{20%}Dy_{80%}, Y_{50%}Dy_{50%} et Y_{80%}Dy_{20%}.

Les spectres de diffraction sont similaires pour les 3 compositions et sont très comparables à celles de solutions solides d'oxydes d'yttrium et de dysprosium disponibles sur les bases de données internationales. On peut donc en conclure que nous sommes en présence de solutions solides, c'est-à-dire de mélanges intimes des deux lanthanides au sein des particules.

## Revendications

1. Produit de codage qui comprend au moins deux composés de lanthanides choisis parmi les halogénures mixtes de lanthanides, les sulfures mixtes de lanthanides, les phosphates mixtes de lanthanides, les oxydes mixtes de lanthanides, les hydroxydes mixtes de lanthanides, les oxohydroxydes mixtes de lanthanides, et les mélanges de ces composés.

2. Produit de codage selon la revendication 1, qui comprend deux, trois, quatre ou cinq composés de lanthanides, de préférence deux ou trois composés de lanthanides.

3. Produit de codage selon la revendication 1 ou 2, dans lequel
- les halogénures mixtes de lanthanides répondent à la formule [Ln1ᵢLn2ⱼ]X₃ où Ln1 représente un premier lanthanide, Ln2 représente un second lanthanide, différent du premier, i et j représentent les proportions atomiques (en pourcentage) de chaque lanthanide, et X représente un atome d'halogène ;
- les sulfures mixtes de lanthanides répondent à la formule [Ln1ᵢLn2ⱼ]₂S₃ où Ln1, Ln2, i et j sont tels que définis ci-dessus ;
- les phosphates mixtes de lanthanides répondent à la formule [Ln1ᵢLn2ⱼ]PO₄ · nH₂O où Ln1, Ln2, i et j sont tels que définis ci-dessus ;
- les oxydes mixtes de lanthanides répondent à la formule [Ln1ᵢLn2ⱼ]₂O₃, où Ln1, Ln2, i et j sont tels que définis ci-dessus ;
- les hydroxydes mixtes de lanthanides répondent à la formule [Ln1ᵢLn2ⱼ](OH)₃, où Ln1, Ln2, i et j sont tels que définis ci-dessus ;
- les oxohydroxydes mixtes de lanthanides répondent à la formule [Ln1ᵢLn2_{j]2}Oₓ(OH)_{y}, où Ln1, Ln2, i et j sont tels que définis ci-dessus, x est choisi de 0 à 3, et y = 6 - 2x.

4. Produit de codage selon la revendication 3, dans lequel la proportion atomique (i,j) de chaque lanthanide est comprise dans la gamme allant de environ (95 :5) à environ (5 :95), de préférence dans la gamme allant de environ (90 :10) à environ (10 :90), de préférence encore dans la gamme allant de environ (80 :20) à environ (20 :80).

5. Produit de codage selon la revendication 3 ou 4, dans lequel Ln1 et Ln2 sont indépendamment choisis parmi la liste Y, La, Pr, Nd, Sm, Eu, Gd, Tb, Dy, Ho, Er, Tm, Yb, Lu.

6. Produit de codage selon l'une des revendications 3 à 5, dans lequel Ln1 est choisi parmi la liste Gd, Y, La, Ho, et Ln2 est choisi parmi la liste, Eu, Tb, Nd, Yb, Er, Dy, Pr, Lu, Sm, Tm.

7. Produit de codage selon l'une des revendications 1 à 6, qui comprend uniquement des oxydes mixtes de lanthanides.

8. Produit de codage selon l'une des revendications 1 à 7, dans lequel les oxydes mixtes de lanthanides sont sous la forme de solutions solides.

9. Produit de codage selon l'une des revendications 1 à 8, dans lequel chaque composé de lanthanides est conditionné dans un emballage distinct.

10. Encre contenant un produit de codage tel que défini dans l'une des revendications 1 à 8.

11. Utilisation d'un produit de codage tel que défini dans l'une des revendications 1 à 8, pour le traçage et/ou l'authentification de documents-valeur.

12. Utilisation selon la revendication 11, dans laquelle les documents-valeur sont des billets de banque.

## Patentansprüche

1. Codierprodukt, das mindestens zwei Lanthanoidverbindungen, die aus Lanthanoid-Mischhalogeniden, Lanthanoid-Mischsulfiden, Lanthanoid-Mischphosphaten, Lanthanoid-Mischoxiden, Lanthanoid-Mischhydroxiden, Lanthanoid-Mischoxyhydroxiden gewählt sind, und die Gemische dieser Verbindungen enthält.

2. Codierprodukt nach Anspruch 1, das zwei, drei, vier oder fünf Lanthanoidverbindungen, vorzugsweise zwei oder drei Lanthanoidverbindungen, enthält.

3. Codierprodukt nach Anspruch 1 oder 2, wobei
- die Lanthanoid-Mischhalogenide der Formel [Ln1ᵢLn2ⱼ]X₃ genügen, wobei Ln1 für ein erstes Lanthanoid steht, Ln2 für ein zweites Lanthanoid steht, das von dem ersten verschieden ist, i und j für die Atomverhältnisse (in Prozent) jedes Lanthanoids stehen und X für ein Halogenatom steht;
- die Lanthanoid-Mischsulfide der Formel [Ln1ᵢLn2ⱼ]₂S₃ genügen, wobei Ln1, Ln2, i und j wie oben definiert sind;
- die Lanthanoid-Mischphosphate der Formel [Ln1ᵢLn2ⱼ]PO₄·nH₂O genügen, wobei Ln1, Ln2, i und j wie oben definiert sind;
- die Lanthanoid-Mischoxide der Formel [Ln1ᵢLn2ⱼ]₂O₃ genügen, wobei Ln1, Ln2, i und j wie oben definiert sind;
- die Lanthanoid-Mischhydroxide der Formel [Ln1ᵢLn2ⱼ](OH)₃ genügen, wobei Ln1, Ln2, i und j wie oben definiert sind;
- die Lanthanoid-Mischoxyhydroxide der Formel [Ln1ᵢ]Ln2ⱼ]₂Oₓ(OH)_{y} genügen, wobei Ln1, Ln2, i und j wie oben definiert sind, x im Bereich von 0 bis 3 gewählt und y = 6 - 2x ist.

4. Codierprodukt nach Anspruch 3, wobei das Atomverhältnis (i,j) jedes Lanthanoids innerhalb der Bandbreite liegt, die von ungefähr (95:5) bis ungefähr (5:95) reicht, vorzugsweise in der Bandbreite, die von ungefähr (90:10) bis ungefähr (10:90) reicht, stärker bevorzugt in der Bandbreite, die von (80:20) bis ungefähr (20:80) reicht.

5. Codierprodukt nach Anspruch 3 oder 4, wobei Ln1 und Ln2 unabhängig voneinander aus der Liste Y, La, Pr, Nd, Sm, Eu, Gd, Tb, Dy, Ho, Er, Tm, Yb, Lu gewählt sind.

6. Codierprodukt nach einem der Ansprüche 3 bis 5, wobei Ln1 aus der Liste Gd, Y, La, Ho gewählt ist und Ln2 aus der Liste Eu, Tb, Nd, Yb, Er, Dy, Pr, Lu, Sm, Tm gewählt ist.

7. Codierprodukt nach einem der Ansprüche 1 bis 6, das nur Lanthanoid-Mischoxide enthält.

8. Codierprodukt nach einem der Ansprüche 1 bis 7, wobei die Lanthanoid-Mischoxide in Form von festen Lösungen vorliegen.

9. Codierprodukt nach einem der Ansprüche 1 bis 8, wobei jede Lanthanoidverbindung in eine verschiedene Verpackung abgepackt ist.

10. Druckfarbe, enthaltend ein Codierprodukt, wie in einem der Ansprüche 1 bis 8 definiert.

11. Verwendung eines Codierprodukts, wie in einem der der Ansprüche 1 bis 8 definiert, zur Rückverfolgung und/oder Authentifizierung von Wertdokumenten.

12. Verwendung nach Anspruch 11, wobei die Wertdokumente Banknoten sind.

## Claims

1. Coding product that comprises at least two lanthanide compounds chosen from the mixed lanthanide halides, the mixed lanthanide sulphides, the mixed lanthanide phosphates, the mixed lanthanide oxides, the mixed lanthanide hydroxides, the mixed lanthanide oxyhydroxides, and mixtures of these compounds.

2. Coding product according to claim 1, which comprises two, three, four or five lanthanide compounds, and preferably two or three lanthanide compounds.

3. Coding product according to claim 1 or 2, in which:
- the mixed lanthanide halides satisfy the formula [Ln1ᵢLn2ⱼ]X₃ in which Ln1 represents a first lanthanide, Ln2 represents a second lanthanide, different from the first, i and j represent the atomic proportions (as a percentage) of each lanthanide, and X represents a halogen atom;
- the mixed lanthanide sulphides satisfy the formula [Ln1ᵢLn2ⱼ]₂S₃ in which Ln1, Ln2, i and j are as defined above;
- the mixed lanthanide phosphates satisfy the formula [Ln1ᵢLn2ⱼ]PO₄ · nH₂O in which Ln1, Ln2, i and j are as defined above;
- the mixed lanthanide oxides satisfy the formula [Ln1ᵢLn2ⱼ]₂O₃ in which Ln1, Ln2, i and j are as defined above;
- the mixed lanthanide hydroxides satisfy the formula [Ln1ᵢLn2ⱼ](OH)₃ in which Ln1, Ln2, i and j are as defined above;
- the mixed lanthanide oxyhydroxides satisfy the formula [Ln1ᵢLn2ⱼ]₂Oₓ(OH)_{y} in which Ln1, Ln2, i and j are as defined above, x is chosen from 0 to 3, and y = 6 - 2x.

4. Coding product according to claim 3, in which the atomic proportion (i, j) of each lanthanide is within the range from around (95:5) to around (5:95), preferably within the range from around (90:10) to around (10:90), and more preferably within the range from around (80:20) to around (20:80).

5. Coding product according to claim 3 or 4, in which Ln1 and Ln2 are independently chosen from the list Y, La, Pr, Nd, Sm, Eu, Gd, Tb, Dy, Ho, Er, Tm, Yb and Lu.

6. Coding product according to one of claims 3 to 5, in which Ln1 is chosen from the list Gd, Y, La and Ho, and Ln2 is chosen from the list Eu, Tb, Nd, Yb, Er, Dy, Pr, Lu, Sm and Tm.

7. Coding product according to one of claims 1 to 6, which comprises only mixed lanthanide oxides.

8. Coding product according to one of claims 1 to 7, in which the mixed lanthanide oxides are in the form of solid solutions.

9. Coding product according to one of claims 1 to 8, in which each lanthanide compound is packaged in a separate packaging.

10. Ink containing a coding product as defined in one of claims 1 to 8.

11. Use of a coding product as defined in one of claims 1 to 8, for the tracing and/or authentication of value documents.

12. Use according to claim 11, in which the value documents are banknotes.
